# EUROPEAN PATENT APPLICATION

(11) **EP 0 993 934 A2**
(43) Date of publication of application: **19.04.2000**
(21) Application number: 99119997.7
(22) Date of filing: 14.10.1999
(51) Int. Cl.: B32B 1/10, B32B 31/20, B29C 33/00

(54) **Methods for making a contoured solid surface laminate**

(30) Priority: 14.10.1998 US 172940
(71) Applicant: Premark RWP Holdings, Inc., Wilmington, Delaware 19801 (US)
(72) Inventor: Canady, Virgil Bedell, Temple, Texas 76501 (US); Lee, Yeing Ming, Temple, Texas 76502 (US)
(74) Representative: Frohwitter, Bernhard, Dipl.-Ing.

(57) **Abstract**

Methods for making contoured solid surface laminates (SSL) are provided where a pre-cured or un-cured SSL is placed in a mold under conditions to impart a contour to the SSL and to allow strains imparted to the SSL during molding to relax. In particular, both batch and continuous methods for forming contoured SSL are provided.

## Description

### 1. Field of the Invention

The present invention relates to a shaped or contoured article including a top layer and a back support layer and optionally, an impact layer interposed therebetween, methods for making and using same.

More particularly, the present invention relates to shaped or contoured solid surface laminate (SSL) for use as counter tops, desk tops, or other surface components, where the surfaces include a decorative top layer bonded to or co-extruded with a backing member having been shaped so that the SSL can be easily fitted over and affixed to a sub-structure in a single installation, and to methods for making and using the SSLs.

### 2. Description of the Related Art

Conventional laminate products are well known in the art. They generally are prepared by laminating a decorative layer and one or more kraft paper layers together using various types of resins, such as melamine formaldehyde and phenolic resins. The resulting decorative laminate is then adhered to a substrate, usually of fiberboard or particle board. The thus prepared product is known as high pressure decorative laminate. Alternatively, low pressure decorative laminate is prepared by laminating a decorative layer, with or without an overlay layer, directly onto a fiberboard or particle board substrate, using the same type of resins used in high pressure decorative laminate. However, while the use of such wood based substrates provides the necessary rigidity for structural uses such as flooring and countertops, these wood based substrates are heavy and can warp in the presence of moisture.

One possible solution to these problems would be to use polymeric substrates for preparing laminates. However, polymeric materials tend to be considerably more expensive, especially those having the desired rigidity and performance characteristics for use in laminate applications.

Foamed polymers are known and are used in various structural end uses. The preparation of polymer foams and their conventional uses are described in Kirk Othmer Encyclopedia of Chemical Technology, 4^{th} Ed., vol. 11, John Wiley and Sons, NY, pp. 730-783 (1997), as well as the "Handbook of Polymeric Foams and Foam Technology", ed. By D. Klempner and K.C. Frisch, Hanser Publishers, NY (1991), the contents of both of which are hereby incorporated by reference.

Another problem that exists is the generation of polymeric wastes, either as manufacturing tailings or through the obsolescence of various commercial products using polymeric materials as the housings, supports and various internal parts of the product. Such products include things such as televisions, stereos, computers, printers, typewriters, etc. Due to the nature of these products and the rapid advancement of technology surrounding them, these types of products are being replaced with increasing frequency. A problem that then arises is how to dispose of the polymer based parts of these devices in an environmentally sound manner, as well as in an economically sound manner.

Besides foam backing substrates, other backing materials have been used as well in making solid surface laminates (SSL). SSL are basically a composite structure including a decorative surface applied (bonded or adhered) to a substrate. One drawback to SSL constructs is that installations of the SSLs to sub-structures generally requires piecing together several different components to achieve a given composite structure. Thus, the flat portions of the construct are made of flat pieces of SSL, while curved components of the construct may comprise one or many separate SSL pieces fitted and bonded together into the final construct shape.

Thus, it would represent an advancement in the art to be able to make shape or contoured SSL structures that could be simply transported to the installation site and set and bonded into place without having to piece together many different sub-components to achieve a desired contoured shape such as a kitchen counter having a arcuate splash guard and curved down front edge or lip.

### SUMMARY OF THE INVENTION

According to one embodiment of the present invention, there is provided a shaped or contoured article including a top layer affixed to a backing member or substrate where the shape or contour is imparted to the article after the top layer is affixed to the backing member.

According to another embodiment of the present invention, there is provided a shaped or contoured article including a top layer affixed to a backing member or substrate where the shape or contour is imparted to the article during top layer substrate bonding or co-extrusion.

According to even another embodiment of the present invention, there is provided a method for making a shaped article including the step of bonding a top layer to a backing member or substrate to form a composite article, placing the composite article in a mold and applying sufficient heat and pressure for a sufficient time to form the shaped or contoured article.

According to still another embodiment of the present invention, there is provided a method for making a shaped article including the step of co-extruding a top layer and a backing member or substrate to form a composite article, placing the co-extruded composite article in a mold and applying sufficient heat and pressure for a sufficient time to form the shaped or contoured article.

According to yet another embodiment of the present invention, there is provided a method for making a shaped article including the step of co-extruding a top layer and a backing member or substrate to directly form a contoured or shaped composite article.

According to even still another embodiment of the present invention, there is provided a method for installing the contoured articles of the present invention to a sub-structure.

These and other embodiments of the present invention will become apparent to those of skill in the art upon review of this specification, including its drawings and claims.

### DETAILED DESCRIPTION OF THE INVENTION

The inventor has found that contoured or profiled solid surface laminates or composites (CSSL or PSSL) can be prepared either by first forming the solid surface laminate (SSL) and then post forming the SSL into a CSSL or by forming the SSL into a CSSL in one step, where the CSSL is designed for one step installation onto appropriate substructures such as kitchen counter sub-structures or the like.

The CSSLs of the present invention can be prepared from any SSL including paper-based, plastic-based or metal-based surfaces bonded to, extruded onto or co-extruded with a substrate or backing member.

Solid surface laminate (SSL) can be described as very thin solid surfacing products (<100 mil thick solid surfacing products), typically polyacrylics containing various fillers, which are disclosed in U.S. Patent Application Serial No. 08/899,118, filed July 23, 1997, herein incorporated by reference.

Paper-based laminates or decorative laminate sheet assemblies or composites include several layers of thermosetting resin impregnated core stock (preferably kraft paper) supporting a thermosetting resin impregnated decorative layer, which may be further overlaid with a thermosetting resin impregnated overlay sheet. The thermosetting resin employed is preferably a phenol formaldehyde resin for the core stock, and preferably a clear melamine formaldehyde resin for the decorative and overlay sheets. The decorative or overlay sheets or layers can also be textured during consolidation. Generally, several laminates are made at a time with a release sheet interposed therebetween for easy separation after consolidation. The laminates are typically consolidated or cured by pressing the laid-up composite between suitable laminate press plates such as a platen press assembly as is well known in the lamination art is utilized to provide the necessary heat and/or pressure during lamination.

Besides paper-based laminates, the present invention can also utilize plastic-based surfacing to make the SSL. The plastic-based surfacing composition includes those described in U.S. Patent Nos. 4,085,246, 4,458,039, 4,533,680, 4,938,825 and 5,318,737, incorporated herein by reference.

The present invention may also utilize microveneer decorative laminate, disclosed in U.S. Patent Application Serial No. 09/082,872, filed May 21, 1998, herein incorporated by reference. Microveneer decorative laminate may generally be described as including a decorative layer that may be either a solid color or print decorative paper having a coating of resin on its wear surface, a resin impregnated glueable backing, and optionally, one or more resin impregnated core layers, and further optionally, one or more resin impregnated overlay layers. In one method of making microveneer decorative laminate, resin is first impregnated into overlay and partially cured. The overlay is positioned over decorative solid color or print paper that has not been impregnated with resin, and optionally along with one or more resin impregnated core sheets, and a resin impregnated backing sheet, all of which are laminated togther under heat and pressure. The resin content in the overlay is adjusted for providing the amount of resin needed for a wear resistant surface and for impregnating the decorative paper. In another method of making microveneer decorative laminate, resin is coated on the decorative surface of solid color decorative paper, which is laminated along with one or more optional resin impregnated core sheets and the resin impregnated backing sheet. The resin impregnates the decorative paper and is partially cured.

The present invention may also utilize solid surface materials, typically polyacrylics containing various fillers. Commercially available products include Gibralter™ products sold by Wilsonart International, Inc.

The present invention may also be used with solid surface veneer, conventionally thinner solid surfacing materials, typically polyacrylics containing various fillers, such as the commercially available SSV™ products (1/8" thick) sold by Wilsonart International, Inc.

The present invention may also be used with solid surfacing dimensional laminate, disclosed in U.S. Patent Application Serial No. 09/161,265, Gaa, filed September 26, 1998, and herein incorporated by reference. Such a solid surfacing dimensional laminate has an enhanced appearance of pattern depth, provided by having overlaying layers of patterned decorative sheets positioned such that each pattern or part thereof is visible through the top of the final consolidated laminate. A plurality of patterned decorative layers are laid-up such that each pattern is off-set one from another making each pattern visible through the top decorative layer or overlay sheet of the formed laminate. As a non-limiting example, suppose that each pattern is a wood grain pattern, then during lay-up each wood grain pattern would be arranged so that the patterns do not substantially overlap, *i.e*., the patterns are offset in the xy plane one from the other.

In addition to paper-based and plastic-based surface covering, the CSSLs of the present invention can also utilize metallic surfaces or metallic laminate surface covering. Metallic surfaces are simply a given gauge of sheet metal, including, without limitation, sheets of aluminum, iron and its alloys such as any of the known types of steel, copper, zinc, copper-zinc alloys such as brass or bronze, cobalt, chromium, titanium, other metals, or mixture or combinations thereof. Metallic laminates are layered composites of paper-based or plastic-based laminae incorporating thin metal laminae therein.

Moreover, the surfacing covering can include a combination of paper-based, plastic-based and metal-based components in some pattern disposed on the substrate to give a composite surface design or inlay structure.

The paper-based, plastic-based and metal-based surface coverings or laminates useful in practice of the present invention may also include, as desired and/or necessary, additives including, without limitation, antioxidants, antiblock agents, slip agents, cross linking agents, stabilizers, ultraviolet ray absorbers, lubricants, foaming agents, antistatic agents, organic and inorganic flame retardants, plasticizers, dyes, pigments, talc, calcium carbonate, carbon black, mica, glass fibers, carbon fibers, aramid resin, asbestos, as well as other fillers as are known in the art.

These laminates, paper-based, plastic based or metal-based, are then either bonded to or extruded onto or co-extruded with a substrate to form an SSL. Once the SSL is formed, then the SSL will generally have a substantially flat cross-sectional profile. In one embodiment of this invention, once the SSL has been made and optionally before or after post formation curing, the SSL is placed into a mold for a time and at a temperature and a pressure sufficient to produce in the SSL a contoured cross-sectional profile. The time, temperature and pressure conditions should be such that the resulting CSSL is formed in a substantially relaxed state. That is, the SSL is preferably formed in the mold under appropriate conditions so that strains imparted to the SSL during molding are substantially relieved, *i.e*., the compositional make-up of the SSL components are allowed to anneal during the molding process.

In one preferred embodiment of this invention, a CSSL is formed by first coating a top surface substrate with an adhesive and overlaying a decorative surface thereon to form a pre-cured SSL. Next, the SSL is placed in a vacuum mold at an elevated temperature and a reduced pressure. The temperature is sufficiently high that the substrate and the surface covering are both pliable or vacuum formable or moldable. The mold is closed and a vacuum is applied to the mold containing the SSL. The vacuum and temperature is maintained for a time sufficient for the SSL to assume the shape of the mold, to become contoured.

If the temperature is below the curing temperature of the SSL adhesive, then, after a time sufficient for the SSL to assume the shape of the mold and to undergo relaxation of any strains imparted to the system during vacuum forming, the mold temperature can be raised above the cure activation temperature. The cure temperature is then maintained for a time sufficient to ensure adequate adhesive curing to build sufficient bond strength to substantially inhibit delamination during cooling and subsequent use.

After curing or molding, the mold with the SSL therein is generally allowed to cool to near room temperature over a time sufficient to allow relaxation during cooling. Once sufficiently cooled, the CSSL is release from the mold. Typically, the mold release temperature is between about room temperature or between about 50°F and about 100°F. Preferably, the release temperature is between about 60°F and about 80°F and particularly, between about 65° and about 75°.

Generally, the molding temperature is above both the pliability temperature of the pre-SSL and the curing temperature of the adhesive so that molding and curing are occurring simultaneously. However, when the process condition are such that the molding temperature is above both the pliability temperature of the pre-SSL and the curing temperature of the adhesive system, careful control over the molding time and temperature ramp-up rate must be exercised to prevent the build up of excess strain in the resulting SSL during the molding/curing operation.

Typically, the molding temperature is controlled, to a large extent, by the softening temperature of the material being placed in the mold. For plastic-based SSL, the molding temperature is preferably above a highest T_{g} of the components making up the SSL. Thus, if the SSL has a T_{g} of 300°F, then the mold temperature will be set to a temperature of at least 300°F and preferably above 300°F. The upper mold temperature is generally controlled by the components of the SSL as well. If the SSL components have melting point temperatures, then the mold temperature should be keep sufficiently below a lowest melting point temperature so that the material does not melt flow or intermix. Preferably, the mold temperature should not excess a temperature about 10°F below the lowest melt point temperature, particularly, the mold temperature should not excess a temperature about 15°F below the lowest melt point temperature, and especially, the mold temperature should not excess a temperature about 20°F below the lowest melt point temperature. If the SSL components do not have melting point temperatures, then the mold temperature is bounded above by the lowest decomposition temperature of the SSL composition.

For most SSLs and pre-cured SSLs, the mold temperature will be in the range of about 250°F to about about 500°F. Of course, SSLs having a metal surface, the temperature will be sufficiently high that the metal will take the mold shape and relax strains during molding, but below the substrate decomposition. Even in metal surfaced SSLs, molding temperatures in the range of about 250°F and about 500°F are suitable, with molding temperatures in the range of about 350°F to about 500°F being preferred.

The pressure used in vacuum forming or molding is broadly below atmospheric pressure of about 760 mm of mercury. Preferably, the pressure is less than about 500 mm or mercury, and particularly less than about 380 mm of mercury.

In another preferred embodiment of this invention, an uncured SSL or pre-cured SSL is placed in conventional thermal mold at a temperature and pressure for a time sufficient to form the SSL into a desired shape or cross-sectional contour and to allow the resulting CSSL to relax to relieve strains built up in the SSL during the molding process.

In yet other embodiment of this invention, an uncure or pre-cured SSL is place in a mold where the mold is rotated relative to a horizontal condition so that a major flat portion of the SSL makes an angle θ with a horizontal line passing through the mold. The angle θ is adjusted so that gravity can help in the molding process. Thus, if the CSSL is to be in the shape of a kitchen countertop, it will have two near right angled turns. One turn will be associated with a splash guard and the second turn will be associated with an opposed edge of the CSSL. If the mold is rotated away from the horizontal by the angle θ, then gravity will assist the molding process. For such as cross-sectional contour, the angle θ will preferably be between about 30 degrees and about 60 degrees, with about 40 degrees to about 50 degrees being particularly preferred and about 45 degrees being especially preferred. Of course, the exact preferred angle θ will depend on the number and location of turns or bends to be molded into the CSSL.

In thermal molding, the SSL is maintained at a sufficient pressure and temperature to allow the material to conform of the contour shape of the mold. While the temperature is as previously disclosed, the pressure should be maintained so that the resulting SSL does not reduce in thickness by more that about 10% of its unmolded thickness, preferably no more than 5% and particularly no more than about 2%.

Although mold time will depend to some extent on the temperature and pressure of the molding process employed and to some extent on the starting temperature and release temperature (ramp-up and cool down), generally, the molding time will be between about a minute to about 24 hours. Preferably, the mold time will be between about 5 minutes and about 4 hours, with mold times between about 10 minutes and 1 hour being particularly preferred and temperature between about 15 minutes and 40 minutes being especially preferred.

To aid in the molding operation, the methods of the present invention can be practiced using one or more standard mold release agents as are known in the art.

While the illustrative embodiments of the invention have been described with particularity, it will be understood that various other modifications will be apparent to and can be readily made by those skilled in the art without departing from the spirit and scope of the invention. Accordingly, it is not intended that the scope of the claims appended hereto be limited to the examples and descriptions set forth herein but rather that the claims be construed as encompassing all the features of patentable novelty which reside in the present invention, including all features which would be treated as equivalents thereof by those skilled in the art to which this invention pertains.

## Claims

1. A method for making a contoured solid surface laminate comprising:
a. applying a decorative layer to a substrate to form a solid surface laminate;
b. placing the solid surface laminate in a mold; and
c. molding the solid surface laminate to produce a contoured solid surface laminate;
wherein the conditions are sufficient so that the contoured solid surface laminates is formed in a relaxed state.

2. The method of claim 1, wherein the solid surface laminate is characterized by a flat portion forming a plane, and wherein step (c) the molding is carried out in a manner that the plane forms an angle Θ with the horizontal during the molding, wherein Θ is in the range of 30 to 60 degrees.

3. The method of claim 1 or 2, wherein the decorative layer is selected from solid surface material, solid surface veneer, solid surface laminate, solid surface dimensional laminate, and microveneer decorative laminate.

4. The method according to any of the preceding claims, wherein the molding is carried out at a temperature above the highest T_{g} of the SSL components, and a pressure below 1.013 bar (760 mm of mercury) and for a molding time in the range of 1 minute to 12 hours.

5. The method according to claim 4, wherein the temperature is in the range of 150°C to 260°C (300°F to 500°F), and pressure is below 0.66 bar (500 mm of mercury) and the molding time is in the range of 10 minutes to 4 hours.

6. The method according to claim 5, wherein the temperature is in the range of 165°C to 205°C (325°F to 400°F), the pressure is below 0.5 bar (380 mm of mercury) and the molding time is in the range of 15 minutes to 2 hours.

7. A mold characterized by comprising:
a. a top platten having a smooth or textured interior surface;
b. a bottom platten having a smooth interior surface;
c. a hinge system attached to both the top and bottom plattens for opening and closing the mold;
d. a heating system for heating the plattens;
e. a temperature probe for monitoring a temperature of the plattens; and
f. a temperature controller for adjusting and maintaining the temperature of the plattens.

8. The mold according to claim 6, wherein the mold is rotated away from the horizontal by an angle Θ.

9. The mold according to claim 8, wherein the angle Θ is between 30 and 60 degrees relative to the horizontal.

10. The mold according to claim 9, wherein the angle Θ is between 40 and 50 degrees relative to the horizontal.

11. A method for making continuously contoured solid surface laminates characterized by:
a. feeding a decorative surface composition to a feeder of a first extruder;
b. feeding a backing material to a feeder of a second extruder; and
c. co-extruding the decorative surface composition and the backing material through dies designed to form a contoured solid surface laminate.
